## Europäisches Patentamt
## European Patent Office
## Office européen des brevets

(19)

(11) Numéro de publication : **0 323 305 B1**

(12)

# FASCICULE DE BREVET EUROPEEN

(45) Date de publication du fascicule du brevet :
**10.07.91 Bulletin 91/28**

(51) Int. Cl.⁵ : **G01V 1/20**

(21) Numéro de dépôt : **88403189.9**

(22) Date de dépôt : **14.12.88**

(54) **Capteur piézo-électrique tubulaire à grande sensibilité.**

(30) Priorité : **30.12.87 FR 8718357**

(43) Date de publication de la demande :
**05.07.89 Bulletin 89/27**

(45) Mention de la délivrance du brevet :
**10.07.91 Bulletin 91/28**

(84) Etats contractants désignés :
**DE GB IT NL**

(56) Documents cités :
**EP-A- 0 251 901**
**WO-A-86/00757**
**FR-A- 2 145 099**
**FR-A- 2 517 155**

(56) Documents cités :
**US-A- 4 568 851**
**JOURNAL OF THE ACOUSTIC SOCIETY OF AMERICA, vol. 68, no. 4 octobre 1980, pages 1025-1029, Acoustical Society of America, New York, US; D. RICKETTS: "Electroacoustic sensitivity of composite piezoelectric polymer cylinders"**

(73) Titulaire : **INSTITUT FRANCAIS DU PETROLE**
**4, Avenue de Bois-Préau**
**F-92502 Rueil-Malmaison (FR)**

(72) Inventeur : **Beauducel, Claude**
**8, rue Talon**
**F-60119 Henonville (FR)**
Inventeur : **Bolze, Etienne**
**96 ter, bd Bellerive**
**F-92500 Rueil-Malmaison (FR)**

## Description

L'invention a pour objet un capteur piézo-électrique de forme tubulaire et à grande sensibilité, dont la structure permet de réaliser des hydrophones continus de très grande longueur résistant très bien à des variations importantes de la pression hydrostatique.

Les capteurs piézo-électrique de forme tubulaire peuvent comporter par exemple un tube réalisé en un matériau ayant des propriétés piézo-électriques tel qu'un polymère du type fluorure de polyvinylidène (PVF 2) par exemple, associé sur chacune de ses faces à une électrode.

L'électrode intérieure est constituée d'un film métallique déposé sur la face intérieure du tube piézo-électrique ou être associée à un noyau central. Lorsque celui-ci est réalisé en un matériau diélectrique, l'électrode peut être constituée par une métallisation de sa surface extérieur ou bien par un fil enroulé hélicoïdalement. Le noyau central peut être réalisé encore en un matériau conducteur, un polymère rendu conducteur par inclusion de particules métalliques, par exemple, ou bien encore sous la forme d'un fil métallique rectiligne.

De tels capteurs sont décrits par exemple dans le brevet français n° 2 145 099, les demandes de brevet français n° 87/09 262 et 81/22 452 celle-ci étant publiée sous le numéro 2 517 155, le brevet US n° 4 568 851 ou la demande de brevet PCT n° 86/00 757.

Par le brevet français précité n° 2 145 099, est connu un capteur piézo-électrique de forme tubulaire constitué d'un noyau central autour duquel est enroulé en hélice au moins un élément sensible piézo-électrique. Celui-ci est constitué d'une bande d'un matériau piézo-électrique souple revêtue d'un film métallique sur chacune de ses faces. Cette structure de capteur permet de réaliser des hydrophones de très grande longueur peu sensibles aux accélérations et aux flexions, qui conviennent pour de nombreuses applications sous-marines, notamment en géophysique. L'utilisation d'éléments sensibles réalisés sous la forme de films piézo-électriques relativement épais, offre des avantages économiques indéniables.

Dans l'article paru dans le "J. ACOUST. SOC. AM 68 (4), oct. 1980 p 1025-1029", est décrit un hydrophone piézo-électrique cylindrique. Un support tubulaire est revêtu d'un film piézo-électrique sur sa surface intérieure et/ou sur sa surface extérieure et fermé à chaque extrémité par une capsule rigide et le volume intérieur est rempli de gaz. Une telle structure présente une sensibilité accrue du fait que le support tubulaire rempli de gaz peut se déformer sous l'action des contraintes exercées radialement, et réalise donc une amplification mécanique. Mais dans le cadre d'applications marines, où la profondeur d'utilisation est très variable, elle se révèlerait peu favorable. Le volume intérieur étant compressible, le support tubulaire résisterait mal à une trop grande élévation de la pression hydrostatique. Des pertes d'étanchéité ou des ruptures de l'élément sensible risqueraient de se produire. Notons aussi que la réalisation d'un capteur piézo-électrique avec un film sensible revêtant la surface intérieure du support tubulaire est très difficile dans la pratique si sa longueur est très grande.

Le dispositif selon l'invention permet d'obtenir à la fois une très grande sensibilité et une capacité à soutenir des variations de pression hydrostatique importantes. Il comporte au moins un élément sensible réalisé en un matériau présentant des propriétés piézo-électriques et associé à des électrodes, cet élément sensible étant disposé sur un support tubulaire.

Il est caractérisé en ce que l'intérieur du support tubulaire contient au moins une substance dont l'impédance acoustique est très différente de celle du matériau constituant ledit support tubulaire, de manière à réaliser un écran acoustique pour les ondes acoustiques traversant le support tubulaire, et des moyens pour maintenir à l'intérieur du support tubulaire une pression sensiblement égale à la pression statique régnant à l'extérieur du capteur piézo-électrique.

L'intérieur du support tubulaire contient par exemple au moins une substance imprégnée d'un liquide.

La substance imprégnée de liquide peut avantageusement être constituée en un matériau fibreux, de la fibre de verre par exemple, ou bien encore en un matériau poreux.

Suivant un mode de réalisation, le support tubulaire muni d'au moins un élément sensible et de la substance constituant l'écran, est disposé à l'intérieur d'une gaine étanche transparente aux ondes acoustiques et remplie d'un liquide, les extrémités du support tubulaire comportant des ouvertures pour laisser pénétrer à l'intérieur le liquide remplissant la gaine étanche.

L'emploi d'une substance qui a pour effet d'atténuer très fortement les ondes acoustiques à l'intérieur du support tubulaire, permet d'augmenter la sensibilité du capteur piézo-électrique dans de larges proportions. La combinaison de cette substance avec des moyens pour réaliser un équilibre statique entre la pression à l'intérieur du support tubulaire et la pression extérieure, et notamment d'un matériau fibreux ou poreux imprégné de liquide sensiblement en équi-pression avec le milieu extérieur, permet de construire un capteur piézo-électrique très sensible et très résistant. Un tel capteur se prête donc bien à des mesures dans l'eau à des profondeurs très variées.

Chaque élément sensible pouvant être enroulé en hélice autour du support tubulaire et la substance constituant l'écran acoustique intérieur étant facile à mettre en place, on peut réaliser des capteurs de grande longueur à des coûts relativement faibles. Des capteurs de ce type disposés à l'intérieur d'une gaine de grande longueur remplie de liquide, permettent par exemple de réaliser des dispositifs de réception pour la prospection sismique, les écoutes sous-marines ou d'autres opérations de géophysique ou d'océanographie.

D'autres caractéristiques et avantages du capteur piézo-électrique selon l'invention apparaitront à la lecture de la description d'un mode de réalisation donné à titre d'exemple non limitatif, en se référant aux dessins annexés où :

— la figure 1 montre un élément sensible piézo-électrique sous la forme d'une bande souple,

— la figure 2 montre un capteur piézo-électrique comportant une bande souple piézo-électrique enroulée sur un support tubulaire,

— la figure 3 montre un mode de réalisation où un capteur piézo-électrique comportant un support tubulaire muni d'un enroulement, est inclus dans une gaine de grande longueur remplie de liquide, et

— la figure 4 montre un autre mode de réalisation où un support tubulaire muni d'un enroulement est recouvert d'une gaine.

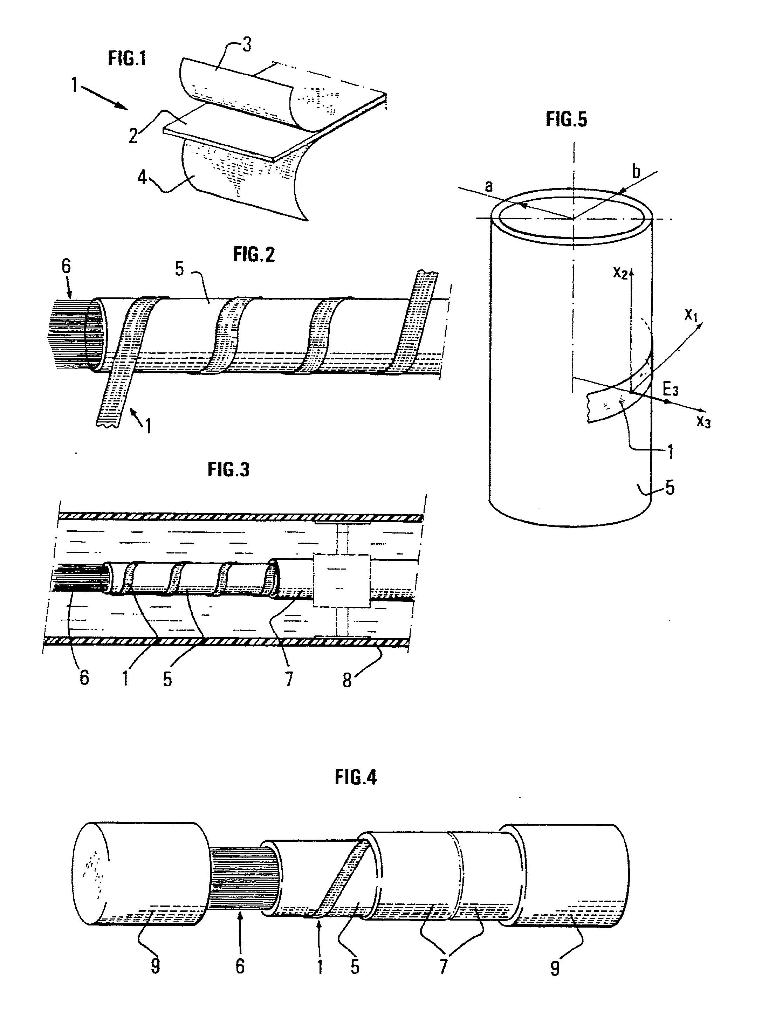

Le capteur piézo-électrique représenté à la figure 1 utilise un élément sensible 1 comportant un substrat mince 2 réalisé en un matériau souple ayant acquis par traitement des propriétés piézo-électriques, tel que du PVF 2 ou autres produits synthétiques plastiques analogues, et revêtu sur deux faces opposées, de films conducteurs 3, 4 constituant des électrodes. Suivant des dispositions connues notamment par la demande de brevet français publiée n° 2 601 132, un tel élément sensible est enroulé en hélice autour d'un support tubulaire 5 (fig. 2) et des bagues conductrices disposées au voisinage des extrémités du support tubulaire, permettent de collecter les charges électriques développées sur les électrodes par les contraintes exercées.

Une substance 6 dont l'impédance acoustique est très différente de celle du support tubulaire 5, est disposée à l'intérieur de celui-ci de manière à constituer un écran pour les ondes acoustiques, et l'on injecte du liquide pour combler l'espace intérieur restant.

Suivant un autre mode de réalisation (fig. 3) l'ensemble ainsi constitué est recouvert d'une gaine protectrice 7 et disposé dans une enveloppe tubulaire 8 remplie de liquide. Dans ce cas, le même liquide remplit l'intérieur de l'enveloppe tubulaire 8 et du support tubulaire 5 qui peut rester ouvert à ses deux extrémités opposées. Il peut s'agir par exemple d'huile ou de kérosène, dans le cas où cette enveloppe souple délimite une flûte sismique en contact avec l'eau où elle est remorquée en immersion par un navire.

Suivant un autre mode de réalisation (fig. 4), le support tubulaire 5 contenant le matériau écran et rempli de liquide, peut aussi être fermé à ses extrémités opposées par des capsules rigides 9 et simplement entourée d'une gaine protectrice 7, de manière à être utilisé tel quel pour certaines applications.

Le matériau constituant l'écran acoustique peut être réalisé sous la forme de cordons en fibre de verre dans l'épaisseur duquel le liquide pénètre par capillarité.

On peut aussi utiliser par exemple des mousses à cellules ouvertes, des matériaux poreux etc, ou tout autre substance dont l'impédance acoustique est très différente de celle du matériau constituant le support tubulaire. On veille à ce que le matériau écran soit réparti de manière bien homogène dans toute la section du support tubulaire 5 et aussi en le remplissant de liquide, à bien en évacuer l'air afin d'obtenir un écran acoustique bien homogène.

Le capteur piézo-électrique ainsi constitué fonctionne parfaitement quelle que soit la pression statique qui lui est appliquée extérieurement. On évite tous les défauts d'étanchéité et les risques d'altération des éléments sensibles qui peuvent survenir dans le cas où le support contient une substance compressible telle qu'un gaz.

On constate à l'expérience que l'utilisation, en combinaison avec le liquide, d'un matériau constituant un écran acoustique, permet d'accroître dans des proportions surprenantes la sensibilité du capteur aux variations de pression dynamique par rapport au cas où le support tubulaire ne contiendrait que du liquide. On constate aussi qu'une bonne homogénéité de l'écran acoustique permet d'obtenir une courbe de réponse en fréquence bien régulière, que s'étend jusqu'à des fréquences très basses, de l'ordre de quelques hertz.

La sensibilité du capteur piézo-électrique peut être encore améliorée par un choix judicieux du module de Young des matériaux constituant le ruban piézo-électrique et le support tubulaire 5 et aussi des dimensions de celui-ci comme on va le voir ci-après.

On considère (fig. 5) un support tubulaire de rayon extérieur b et d'épaisseur (b-a), à la surface duquel est enroulé un film piézo-électrique mince d'épaisseur $h_p$ tel que le film 1. La sensibilité $M_0$ de l'élément sensible (exprimée en volt/bar) est égale au rapport de la tension électrique $e_0$ qui apparait entre ses électrodes et la pression $P_0$ appliquée. On considère aussi que le champ électrique $E_3$ suivant la direction radiale $x_3$ perpendiculaire au plan de l'élément sensible, ne varie sensiblement pas dans son épaisseur $h_p$ et donc que la tension électrique $e_0$ apparaissant entre les électrodes est égale à $h_p E_3$. Le champ électrique $E_3$ s'exprime comme une combinaison linéaire des contraintes $T_{1P}$, $T_{2P}$, et $T_{3P}$ appliquées à l'élément sensible suivant trois axes, l'axe $x_3$ précédemment défini et deux axes $x_1$ et $x_2$ dans le plan tangent au support tubulaire 5. On en déduit que la sensibilité de l'élément sensible s'exprime par la relation :

$$M_0 = h_p \left( g_{31} \frac{T_{1P}}{P_0} + g_{32} \frac{T_{2P}}{P_0} + g_{33} \frac{T_{3P}}{P_0} \right) \quad (1)$$

où $g_{31}$, $g_{32}$ et $g_{33}$ sont les coefficients piézo-électriques du substrat.

Dans la relation (1) on admet que la contrainte $T_{3P}$ suivant l'axe radial $x_3$ est égale à la pression $P_0$ appliquée.

Par l'application des lois de Hooke et en partant de l'hypothèse justifiée que les dilatations relatives de l'élément sensible suivant les deux axes $x_1$, $x_2$ du plan tangent, en réponse à une pression $P_0$ exercée suivant l'axe $x_3$, sont les mêmes que les dilatations subies à la périphérie du support tubulaire suivant ces deux mêmes axes, on peut établir les relations suivantes :

$$S = \frac{T_{1P}}{P_0} = \frac{n_p}{1-n_p} + \frac{E_p}{E} \cdot \frac{-2r^2 n_p (2n + 1) + r^2 (2n_p^2 - n_p + 2n + 1)}{(1 - r^2)(2n_p - 1)(n_p + 1)(1 - n_p)} +$$

$$\frac{E_p}{E} \cdot \frac{n_p (4n\, n_p - 2n_p + 2n - 1) + 1 - 2n}{(1 - r^2)(2n_p - 1)(n_p + 1)(1 - n_p)}$$

$$T = \frac{T_{2P}}{P_0} = \frac{n_p}{1-n_p} + \frac{E_p}{E} \cdot \frac{-2r^2 n_p (2n\, n_p + n_p - n - 1) + r^2 (n_p - 1)}{(1 - r^2)(2n_p - 1)(n_p + 1)(1 - n_p)} +$$

$$\frac{E_p}{E} \cdot \frac{n_p (4n\, n_p - 2n_p + 2n - 1) + 1 - 2n}{(1 - r^2)(2n_p - 1)(n_p + 1)(1 - n_p)}$$

– où $n_p$ et $n$ désignent respectivement les coéfficients de Poisson de l'élément sensible et du support tubulaire,

– $E_p$ et $E$ désignent respectivement les modules de Young de l'élément sensible et du support tubulaire, et

– r désigne le rapport a/b entre le rayon intérieur a et le rayon extérieur b du support tubulaire.

Une étude de variation de la sensibilité $M_0$ en fonction des différents paramètres intervenant dans les relations ci-dessus, montre qu'elle sera d'autant meilleure que le rapport $E_p/E$ sera élevé et que le rapport r sera proche de l'unité.

Les vérifications expérimentales ont donné des résultats en parfaite concordance avec les relations telles qu'elles ont été établies. La sensibilité du capteur piézo-électrique est notamment améliorée si le module de Young de l'élément sensible 1 est beaucoup plus élevé que celui du support tubulaire 5 et également si l'épaisseur de celui-ci est fine (r # 1).

L'utilisation de la structure montrée sur les figures 1 à 4 optimisée en ce qui concerne les paramètres influant sur la sensibilité, permet de porter celle-ci à des valeurs de plusieurs dizaines de volt par bar de pression appliquée (typiquement 50 V/b) avec une bande passante, descendant jusqu'à des fréquences très basses et une réponse bien régulière en fréquence.

Le capteur piézo-électrique selon l'invention se prête donc bien pour servir de récepteur sismique dans le cadre d'opérations de prospection sismique marine et d'une manière plus générale, pour des mesures géophysiques ou océanographiques.

On ne sortirait pas du cadre de l'invention en utilisant un élément sensible différent de celui utilisé dans les modes de réalisation décrits. On pourra employer par exemple un élément sensible tubulaire disposé contre la paroi extérieure du support.

## Revendications

1. Capteur piézo-électrique tubulaire comportant au moins un élément sensible (1) réalisé en un matériau (2) présentant des propriétés piézo-électriques et associé à des électrodes (3, 4), cet élément sensible étant disposé sur un support tubulaire (5), caractérisé en ce que l'intérieur du support tubulaire contient au moins une substance (6) dans l'impédance acoustique est très différente de celle du matériau constituant ledit support tubulaire de manière à réaliser un écran acoustique pour les ondes acoustiques traversant le support tubulaire et des moyens pour maintenir à l'intérieur du support tubulaire une pression sensiblement égale à la pression statique régnant à l'extérieur du capteur piézo-électrique.

2. Capteur piézo-électrique selon la revendication 1, caractérisé en ce que l'intérieur du support tubulaire (5) contient au moins une substance imprégnée d'un liquide.

3. Capteur piézo-électrique selon la revendication 2, caractérisé en ce que l'intérieur du support tubulaire (5) contient un matériau fibreux.

4. Capteur piézo-électrique selon la revendication 2, caractérisé en ce que l'intérieur du support tubulaire (5) contient un matériau poreux.

5. Capteur piézo-électrique selon la revendication 3, caractérisé en ce que le matériau fibreux est réalisé en fibre de verre.

6. Capteur piézo-électrique selon la revendication 2, caractérisé en ce que le support tubulaire (5) muni d'au moins un élément sensible (1), est disposé à l'intérieur d'une enveloppe étanche (8) transparente aux ondes acoustiques et remplie d'un liquide, les extrémités du support tubulaire (5) comportant des ouvertures pour laisser pénétrer à l'intérieur le liquide remplissant l'enveloppe étanche.

7. Capteur piézo-électrique selon la revendication 1, caractérisé en ce que l'élément sensible (1) est réalisé sur la forme d'un film mince.

8. Capteur piézo-électrique selon la revendication 7, caractérisé en ce qu'il comporte au moins un élément sensible enroulé en hélice autour du support tubulaire.

9. Capteur piézo-électrique selon la revendication 7, caractérisé en ce qu'il comporte deux éléments sensibles enroulés suivant deux hélices de sens opposés autour du support tubulaire (5).

10. Capteur piézo-électrique selon l'une des revendications précédentes, caractérisé en ce que le module de Young du matériau constitutif du support tubulaire (5) est choisi très inférieur au module correspondant du substrat (2) de l'élément sensible (1).

11. Capteur piézo-électrique selon la revendication 10, caractérisé en ce que l'épaisseur du support tubulaire (5) est choisie très mince relativement à son diamètre.

## Ansprüche

1. Piezoelektrischer Wandler bzw. Sensor mit wenigstens einem empfindlichen Element (1), das aus einem Material (2) hergestellt ist, welches piezoelektrische Eigenschaften aufweist und Elektroden (3, 4) zugeordnet ist, wobei dieses empfindliche Element auf einem rohrförmigen Träger (5) angeordnet ist, dadurch gekennzeichnet, daß das Innere des rohrförmigen Trägers wenigstens eine Substanz (6) enthält, deren akustische Impedanz sehr unterschiedlich zu der des diesen rohrförmigen Träger bildenden Materials derart ist, daß ein akustischer Schirm für akustische den röhrenförmigen Träger durchsetzende Wellen gebildet wird und Mittel, um im Inneren des rohrförmigen Trägers einen Druck aufrecht zu erhalten, der im wesentlichen gleich dem statischen außerhalb des piezoelektrischen Wandlers herrschenden Drucks ist.

2. Piezoelektrischer Wandler nach Anspruch 1, dadurch gekennzeichnet, daß das Innere des rohrförmigen Trägers (5) wenigstens eine mit einer Flüssigkeit imprägnierte Substanz enthält.

3. Piezoelektrischer Wandler nach Anspruch 2, dadurch gekennzeichnet, daß das Innere des rohrförmigen Trägers (5) ein fasriges Material enthält.

4. Piezoelektrischer Wandler nach Anspruch 2, dadurch gekennzeichnet, daß das Innere des rohrförmigen Trägers (5) ein poröses Material enthält.

5. Piezoelektrischer Wandler nach Anspruch 3, dadurch gekennzeichnet, daß das fasrige Material aus Glasfasern hergestellt ist.

6. Piezoelektrischer Wandler nach Anspruch 2, dadurch gekennzeichnet, daß der rohrförmige Träger (5), der mit wenigstens einem empfindlichen Element (1) ausgestattet ist, im Inneren einer dichten Umhüllung (8) angeordnet ist, die transparent für akustische Wellen und mit einer Flüssigkeit gefüllt ist, wobei die Enden des rohrförmigen Trägers (5) Öffnungen haben, um in das Innere die dichte Umhüllung füllende Flüssigkeit eindringen zu lassen.

7. Piezoelektrischer Wandler nach Anspruch 1, dadurch gekennzeichnet, daß das empfindliche Element (1) in Form eines dünnen Films ausgebildet ist.

8. Piezoelektrischer Wandler nach Anspruch 7, dadurch gekennzeichnet, daß er wenigstens ein empfindliches wendelförmig um den rohrförmigen Träger gewickeltes Element umfaßt.

9. Piezoelektrischer Wandler nach Anspruch 7, dadurch gekennzeichnet, daß er zwei empfindliche entsprechend zwei in entgegengesetztem Sinn um den rohrförmigen Träger (5) gewickelte Wendeln umfaßt.

10. Piezoelektrischer Wandler nach einem der vorhergehenden Ansprüche, dadurch gekennzeichnet, daß der Young-Modul des den rohrförmigen Träger (5) bildenden Materials sehr viel kleiner als der Modul gewählt ist, der dem Substrat (2) des empfindlichen Elements (1) entspricht.

11. Piezoelektrischer Wandler nach Anspruch 10, dadurch gekennzeichnet, daß die Dicke des rohrförmigen Trägers (5) relativ zu seinem Durchmesser sehr dünn gewählt ist.

## Claims

1. Piezo electric transducer of tubular type comprising at least one sensitive element (1) made from a material (2) with piezo electric properties and associated with electrodes (3, 4), this sensitive element being arranged on a tubular support (5), characterised in that the interior of the tubular support contains at least one substance (6) with an acoustic impedance which is very different from that of the material constituting the said tubular support, in order to provide an acoustic screen for the sound waves passing through the tubular support, together with the means of maintaining, inside the tubular support, a pressure which is basically equal to the static pressure existing outside the piezo electric transducer.

2. Piezo electric transducer in accordance with claim 1, characterised in that the interior of the tubular support (5) contains at least one substance impregnated with a liquid.

3. Piezo electric transducer in accordance with claim 2, characterised in that the interior of the tubular support (5) contains a fibrous material.

4. Piezo electric transducer in accordance with claim 2, characterised in that the interior of the tubular support (5) contains a porous material.

5. Piezo electric transducer in accordance with claim 3, characterised in that the fibrous material is in the form of glass fibre.

6. Piezo electric transducer in accordance with claim 2, characterised in that the tubular support (5) with at least one sensitive element (1) is positioned inside a sealed sheath (8) which is transparent to sound waves and filled with a liquid, the ends of the tubular support (5) including apertures which allow the liquid fillng the sealed sheath to penetrate within the device.

7. Piezo electric transducer in accordance with claim 1, characterised in that the sensitive element (1) is produced in the form of a thin film.

8. Piezo electric transducer in accordance with claim 7, characterised in that comprises at least- one sensitive element wound in the form of a helix around the tubular support.

9. Piezo electric transducer in accordance with claim 7, characterised in that it comprises two sensitive elements in the form of two helixes wound in opposite directions around the tubular support (5).

10. Piezo electric transducer in accordance with one of the preceding claims, characterised in that Young's modulus for the material comprising the tubular support (5) is selected so that its value is considerably less that the value of Young's modulus corresponding to the substrate (2) forming part of the sensitive element (1).

11. Piezo electric sensor in accordance with claim 10, characterised in that the thickness of the tubular support (5) is selected so that it is very low relative to its diameter.

**FIG.1**

1

3

2

4

**FIG.2**

6

5

1

**FIG.3**

6   1   5   7   8

**FIG.5**

a   b

$x_2$

$x_1$

$E_3$

$x_3$

1

5

**FIG.4**

9   6   1   5   7   9